# DEMANDE DE BREVET EUROPEEN

(11) **EP 2 704 415 A1**
(43) Date de publication de la demande: **05.03.2014**
(21) Numéro de dépôt: 13181910.4
(22) Date de dépôt: 27.08.2013
(51) Int. Cl.: H04N 5/225, H04N 5/232, F16M 11/12, G03B 17/17

(54) **Dispositif d'imagerie à grand angle de vue**

(30) Priorité: 28.08.2012 FR 1258033
(71) Demandeur: COMMISSARIAT A L'ENERGIE ATOMIQUE ET AUX ENERGIES ALTERNATIVES, 75015 Paris (FR)
(72) Inventeur: Gidon, Serge, 38140 LA MURETTE (FR)
(74) Mandataire: Thibon, Laurent

(57) **Abrégé**

L'invention concerne un dispositif d'imagerie comprenant un élément à au moins une paroi réflectrice en portion de sphère (5), une lentille convergente (2) et une matrice de détection d'image (1), dans lequel la lentille et la matrice sont montées fixes l'une par rapport à l'autre sur une monture (13), cette monture étant articulée par rapport audit élément (5).

## Description

### Domaine de l'invention

La présente invention concerne un dispositif d'imagerie à grand angle de vue et plus particulièrement un tel dispositif d'imagerie destiné à détecter la présence d'individus dans une scène observée.

### Exposé de l'art antérieur

On s'intéresse ici à la détection de présence de personnes dans une scène, par exemple une pièce, une salle ou un site en extérieur. On cherche principalement à identifier le fait qu'une ou plusieurs personnes sont présentes, à situer grossièrement les personnes dans la scène voire à détecter des mouvements de personnes. Cette détection peut être destinée, dans des systèmes de domotique, à assurer une régulation d'un chauffage ou d'une climatisation en fonction du nombre de personnes présentes. Elle peut aussi servir à déclencher un dispositif particulier, par exemple l'allumage d'une vitrine ou le déclenchement d'un dispositif audio ou vidéo, quand une ou plusieurs personnes s'en approchent.

Pour cela, il est généralement prévu de disposer un dispositif d'imagerie à grand angle de vue, par exemple au plafond d'une pièce, ou dans un angle d'une enceinte quelconque, pour balayer de façon générale la scène à surveiller et permettre de faire l'image de cette enceinte sur un capteur. Dans le cas particulier de la détection du nombre et de la position de personnes, on préférera enregistrer sur le capteur une image thermique de la scène en utilisant un système fonctionnant dans l'infrarouge, par exemple à des longueurs d'onde infrarouges voisines de 10 µm. Pour de la détection de mouvements, des rayons dans le domaine visible pourront être utilisés.

Plusieurs problèmes se posent pour réaliser un tel dispositif d'imagerie à grand angle de vue. Les dispositifs grand angle connus utilisés en photographie sont généralement des dispositifs optiques extrêmement coûteux, impliquant un grand nombre de lentilles et/ou de miroirs dont les caractéristiques et les positions relatives doivent être ajustées avec précision. En effet, dans le domaine de la photographie, on cherche à réaliser des dispositifs grand angle fournissant une image nette et d'aussi bonne qualité que possible.

Ainsi, il existe un besoin pour des dispositifs à vision grand angle de détection de présence ou de mouvement qui soient peu couteux et simples à réaliser et à mettre en place.

### Résumé

Un mode de réalisation de la présente invention prévoit un dispositif d'imagerie comprenant un élément à au moins une paroi réflectrice en portion de sphère, une lentille convergente et une matrice de détection d'image, dans lequel la lentille et la matrice sont montées fixes l'une par rapport à l'autre sur une monture, cette monture étant articulée par rapport à l'élément.

Selon un mode de réalisation de la présente invention, la monture est montée sur l'élément en liaison rotule, en liaison glissière ou en liaison pivot-glissant.

Selon un mode de réalisation de la présente invention, l'articulation entre la monture et l'élément est réalisée au niveau de la surface de la paroi.

Selon un mode de réalisation de la présente invention, la matrice et la lentille sont disposées par rapport à l'élément pour qu'un faisceau qui serait transmis par la lentille de la matrice vers l'élément atteigne une partie seulement de la paroi et soit réfléchi vers une zone selon une étendue angulaire supérieure à 90°.

Selon un mode de réalisation de la présente invention, le dispositif comprend en outre un diaphragme placé entre l'élément et la lentille convergente.

Selon un mode de réalisation de la présente invention, l'élément est une bille.

Selon un mode de réalisation de la présente invention, l'élément est une bille de roulement à bille.

Selon un mode de réalisation de la présente invention, la bille a un rayon compris entre 7 et 15 mm.

Selon un mode de réalisation de la présente invention, la lentille a un diamètre de l'ordre de 5 à 20 mm et une distance focale du même ordre de grandeur.

Selon un mode de réalisation de la présente invention, la matrice de détection d'image est adaptée à détecter des rayons infrarouges, le dispositif étant adapté à détecter la présence de personnes placées à plusieurs mètres de l'élément.

Selon un mode de réalisation de la présente invention, la matrice de détection d'image est adaptée à détecter des rayons dans le domaine visible, le dispositif étant adapté à détecter des mouvements d'objets placés à plusieurs mètres de l'élément.

Selon un mode de réalisation de la présente invention, la monture comprend plusieurs bras venant emprisonner l'élément entre eux et montés selon une liaison rotule avec l'élément.

Selon un mode de réalisation de la présente invention, la lentille est une lentille de Fresnel.

Un mode de réalisation prévoit en outre une utilisation du dispositif d'imagerie ci-dessus pour la détection de personnes et/ou la détection de mouvements dans une scène.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 représente très schématiquement un dispositif optique d'imagerie grand angle ;
la figure 2 représente très schématiquement une variante de réalisation d'un dispositif optique d'imagerie grand angle ; et
la figure 3 représente un mode de réalisation particulier du montage mécanique du dispositif des figures 1 et 2.

### Description détaillée

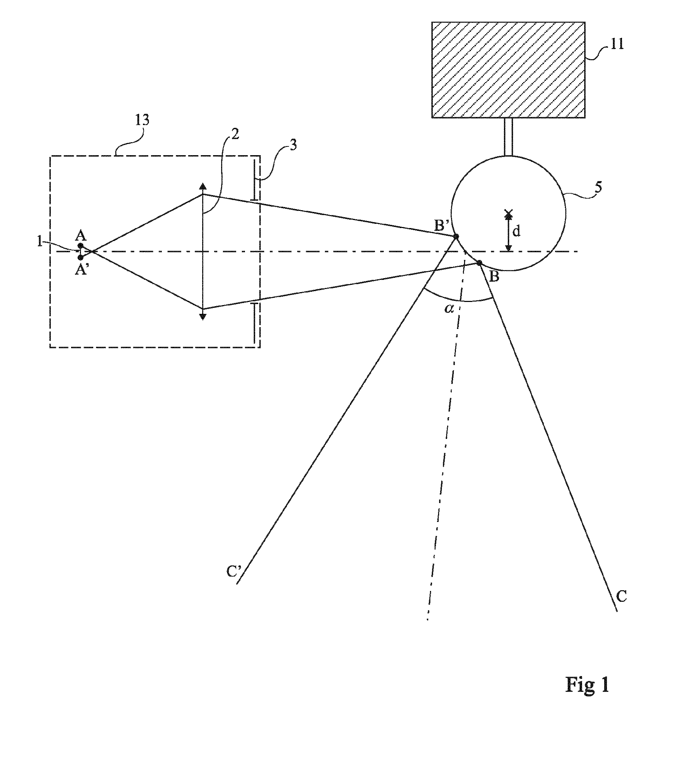

La figure 1 représente le schéma optique d'un dispositif d'imagerie à grand angle. Ce dispositif comprend un capteur 1 constitué d'un dispositif matriciel de détection d'image comprenant une matrice de pixels sensibles à la lumière, éventuellement de type bolométrique, c'est-à-dire sensible à l'échauffement provoqué par la lumière et plus particulièrement par un rayonnement infrarouge. Dans le cas de détection de mouvement, le dispositif matriciel de détection 1 pourra être sensible à des rayons dans le domaine visible. Le dispositif d'imagerie comprend également une lentille convergente 2, un diaphragme 3 et une bille réflectrice 5. La lentille 2 constitue un dispositif à forte ouverture numérique, par exemple de l'ordre de l'unité, dans le cas où sa distance focale est égale à son diamètre. Le diaphragme 3 est positionné entre la lentille 2 et la bille 5 de façon à fixer des limites des faisceaux lumineux (pour filtrer des rayons parasites et limiter les aberrations). Le capteur 1 est disposé légèrement en arrière du foyer de la lentille 2, la bille jouant le rôle de lentille divergente (forte puissance divergente). Dans l'exemple illustré, l'axe optique de la lentille coupe la bille vers le bas de celle-ci et est espacé d'une distance d du centre de la bille.

Si on désigne par A et A' deux extrémités opposées du capteur, les rayons les plus divergents sont les rayons qui vont du point A à l'extrémité opposée de la lentille 2 et du point A' à l'extrémité opposée de cette lentille. Ces rayons délimitent un faisceau qui frappe entre des points B' et B la bille réflectrice 5 d'où ils sont réfléchis dans des directions correspondant à des rayons désignés par des références C' et C vers une scène à observer. L'angle d'ouverture α du faisceau délimité par les rayons C et C' peut être important, par exemple supérieur à 90°, si la focale de la lentille 2, la position du capteur 1 et la distance entre la lentille et le capteur sont convenablement choisies.

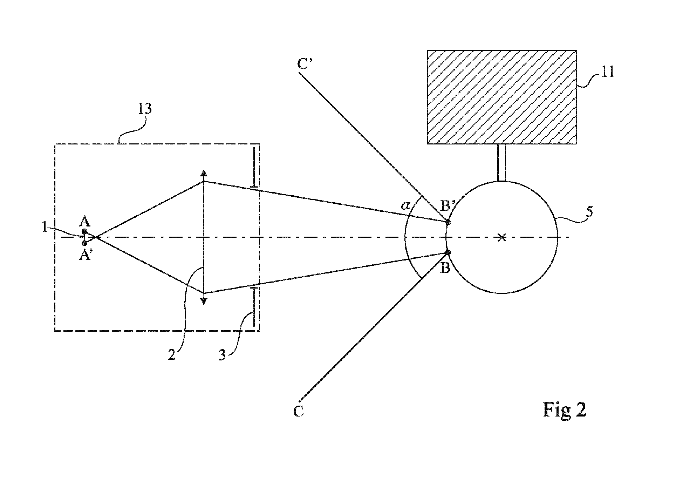

La figure 2 illustre une variante de réalisation du dispositif optique d'imagerie grand angle de la figure 1.

Dans cette figure est illustré un capteur 1 constitué d'un dispositif matriciel de détection d'image comprenant une matrice de pixels sensibles à la lumière. Le dispositif matriciel de détection 1 pourra être prévu pour être sensible à des rayons dans le domaine visible ou dans l'infrarouge, en fonction de l'application désirée. Le dispositif d'imagerie comprend également une lentille convergente 2, un diaphragme 3 et une bille réflectrice 5. Le diaphragme 3 est positionné entre la lentille 2 et la bille 5 de façon à fixer des limites des faisceaux lumineux. Le capteur 1 est disposé légèrement en arrière du foyer de la lentille 2, la bille se comportant comme une lentille divergente. Dans l'exemple illustré, l'axe optique de la lentille 2 coupe la bille en son centre.

Si on désigne par A et A' deux extrémités opposées du capteur, les rayons les plus divergents sont les rayons qui vont du point A à l'extrémité opposée de la lentille 2 et du point A' à l'extrémité opposée de cette lentille. Ces rayons délimitent un faisceau qui frappe entre des points B' et B la bille réflectrice 5 d'où ils sont réfléchis dans des directions correspondant à des rayons désignés par des références C' et C vers une scène à observer. L'angle d'ouverture α du faisceau délimité par les rayons C et C' peut être important, par exemple supérieur à 90°, si la focale de la lentille 2, la position du capteur 1 et la distance entre la lentille et le capteur sont convenablement choisies. Dans cet exemple, la scène observée se trouve en arrière du système de détection 10.

On ne donnera pas ici de règle précise pour fixer les valeurs de la focale de la lentille 2, de la position du capteur 1, de la distance entre la lentille et le capteur et de la position du diaphragme 3 étant donné que, en pratique, aujourd'hui, pour optimiser un tel système, on utilise des logiciels de calcul optique, tels que le logiciel commercialisé sous l'appellation ZEMAX. On introduit les paramètres généraux décrits précédemment (taille du capteur, focale de la lentille 2, ouverture numérique du système et diamètre de la bille 5) comme paramètres d'entrée du logiciel et on optimise ces paramètres pour obtenir un résultat souhaité, sous la contrainte d'un champ d'observation α souhaité. En pratique, on pourra choisir ces dimensions de façon que l'angle α soit supérieur à 90°.

Comme cela est représenté, la bille 5 est par exemple solidaire d'un support 11 destiné à être fixé au plafond ou sur une paroi d'une enceinte à surveiller. L'ensemble de la lentille et du capteur 1 est lié à une monture 13 de façon que la distance entre la lentille et le capteur soit maintenue fixe. De plus, comme cela sera décrit en détail ci-après à titre d'exemple en relation avec la figure 2, la monture 13 est de préférence articulée sur la bille 5 pour permettre de faire varier la direction et éventuellement l'ouverture du faisceau d'observation C'-C.

A titre d'exemple de réalisation, on pourra choisir pour la bille 5 une bille du type utilisé dans les roulements à bille. En effet, les normes imposées pour la réalisation des billes de roulement à bille font qu'elles ont une forme sensiblement sphérique avec une rugosité extrêmement faible et notamment très inférieure à la longueur d'onde optique considérée, plus particulièrement dans le cas où l'onde optique à détecter a une longueur d'onde de l'ordre de 10 µm.

La lentille 2 pourra être une lentille simple, par exemple de type lentille de Fresnel, réalisée par moulage d'un matériau plastique.

Le capteur matriciel 1 ne sera pas décrit en détail car de nombreux modes de réalisation de tels capteurs sont bien connus dans la technique.

On notera que le dispositif d'imagerie grand angle décrit ci-dessus présente une certaine distorsion optique et notamment des phénomènes de vignettage par obstruction (dû à la présence éventuelle du capteur dans le champ). Ainsi, le capteur sera de préférence étalonné au préalable pour permettre de corriger la position de cibles (des individus) présents dans la scène observée.

A titre d'exemple et sans que cela soit limitatif, la bille 5 pourra avoir un rayon de 7 à 15 mm, par exemple 10 mm, la lentille pourra avoir un diamètre de l'ordre de 5 à 20 mm, par exemple 10 mm, et une distance focale du même ordre de grandeur que son diamètre. La distance entre la lentille et la bille peut être comprise entre 30 mm et 60 mm. Il résulte de ces dimensions que l'encombrement total du dispositif décrit précédemment sera tel que ce dispositif, monture comprise, pourra être contenu dans un parallélépipède de dimensions inférieures à 10 cm de longueur et 5 cm de côté. En général, la scène à observer sera située à plusieurs mètres du dispositif d'imagerie.

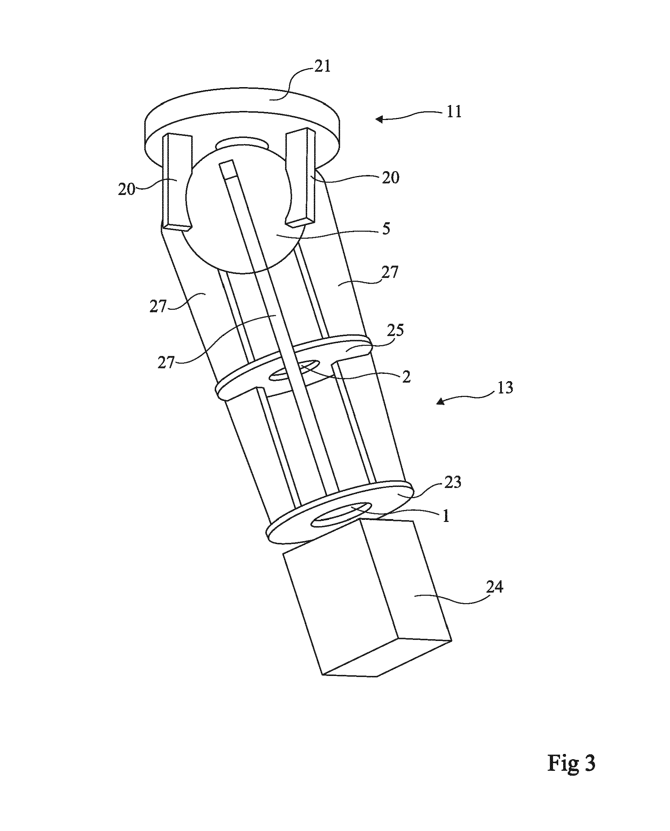

La figure 3 représente un exemple de montage mécanique du dispositif décrit précédemment dans lequel la bille 5 sert à la fois pour ses propriétés optiques et pour ses propriétés mécaniques. Ainsi, elle constitue à la fois un réflecteur et un élément d'une liaison à rotule.

Le support 11 de la bille 5 est par exemple constitué de trois bras à 120° l'un de l'autre venant serrer entre eux la bille. Ces bras sont solidaires d'une embase 21. Une fois la bille 20 enserrée entre les bras, elle pourra être fixée à ceux-ci, par exemple par des points de colle. On peut également prévoir de conserver un mouvement entre les bras et la bille, avec une friction.

La monture 13 de l'ensemble lentille-capteur comprend un premier support 23 en forme de bague destiné à recevoir le capteur 1, ce capteur étant associé à une électronique de détection 24. Une deuxième bague 25 est destinée à recevoir la lentille 2, voire le diaphragme 3. L'ensemble des bagues 23 et 25 est lié par une monture qui se termine par trois bras 27 à 120° l'un de l'autre venant enserrer entre eux la bille. Ainsi, la position relative du capteur et de la lentille est fixée par la position des bagues 23 et 25 et on peut déplacer en rotation l'ensemble de la monture 13 par rapport à la bille 5 qui sert alors d'élément d'articulation (de rotule), pour viser une partie choisie d'une scène. On pourra aussi prévoir un élément de blocage, non représenté. A titre de variante, le maintien en friction de la bille dans la monture 13 pourra être suffisant. Le dispositif est ainsi très simple à mettre en place et à régler.

Comme cela a été représenté en figure 1, l'axe optique du capteur 1 pourra être excentré du centre de la bille 5. Pour cela, on pourra prévoir de placer le capteur 1 et la lentille 2 de façon excentrée de l'axe central de la monture 13.

Diverses variantes de réalisation apparaîtront à l'homme de l'art. Notamment on pourra prévoir un ou plusieurs écrans, en plus du diaphragme 3 pour éviter que de la lumière parasite n'atteigne le détecteur. On pourra également remplacer la monture 13 par tout système à un seul bras fixé à la bille 5.

Selon une autre variante de réalisation, on peut prévoir d'autres types d'articulation, et donc de mouvement, entre la monture 13 et la bille. Notamment, diverses structures mécaniques pourront être utilisées pour que ces deux éléments soient mobiles selon un mouvement de type liaison glissière (la distance séparant la bille 5 et la monture 13 étant variable) ou en pivot glissant, notamment si on désire modifier le champ de vision du dispositif d'imagerie.

Un dispositif tel que décrit ci-dessus pourra être utilisé pour de nombreuses applications. Notamment, si le dispositif de détection d'image 1 est sensible à des rayons infrarouges, il pourra être utilisé pour détecter la position de personnes dans une pièce, ou encore détecter des mouvements de personnes. Si le dispositif de détection d'image 1 est sensible à des rayons dans le domaine visible, il pourra être utilisé pour détecter des mouvements de personnes dans une pièce (par des détections de mouvements de formes floues dans la scène surveillée).

On notera en outre que, bien que l'on ait mentionné dans l'ensemble de cette description un dispositif comprenant une bille sphérique réflectrice, on comprendra que cette bille pourra être remplacée, sans modification du fonctionnement du dispositif, par un élément comprenant au moins une paroi réflectrice en portion de sphère. Bien entendu, dans ce cas, la paroi réflectrice sera correctement positionnée de façon à diriger vers la lentille l'image de la scène à observer, et la liaison entre la monture 13 et l'élément sera adaptée à la forme de cet élément. Ainsi, une demi-bille, ou d'autres structures présentant des portions sphériques, pourront être prévues en remplacement de la bille 5 proposée ici.

## Revendications

1. Dispositif d'imagerie comprenant au moins une portion de bille sphérique réflectrice (5), une lentille convergente (2) et une matrice de détection d'image (1), dans lequel la lentille et la matrice sont montées fixes l'une par rapport à l'autre sur une monture (13), cette monture étant articulée sur la bille (5) en liaison rotule.

2. Dispositif selon la revendication 1, dans lequel la matrice et la lentille sont disposées par rapport à la bille (5) pour qu'un faisceau qui serait transmis par la lentille de la matrice vers la bille atteigne une partie seulement de ladite paroi et soit réfléchi vers une zone selon une étendue angulaire (α) supérieure à 90°.

3. Dispositif selon la revendication 1 ou 2, comprenant en outre un diaphragme (3) placé entre la bille (5) et la lentille convergente (2).

4. Dispositif selon l'une quelconque des revendications 1 à 3, dans lequel la bille est une bille de roulement à bille.

5. Dispositif selon l'une quelconque des revendications 1 à 4, dans lequel la bille (5) a un rayon compris entre 7 et 15 mm.

6. Dispositif selon l'une quelconque des revendications 1 à 5, dans lequel la lentille (2) a un diamètre de l'ordre de 5 à 20 mm et une distance focale du même ordre de grandeur.

7. Dispositif selon l'une quelconque des revendications 1 à 6, dans lequel la matrice de détection d'image (1) est adaptée à détecter des rayons infrarouges, le dispositif étant adapté à détecter la présence de personnes placées à plusieurs mètres de la bille (5).

8. Dispositif selon l'une quelconque des revendications 1 à 7, dans lequel la matrice de détection d'image (1) est adaptée à détecter des rayons dans le domaine visible, le dispositif étant adapté à détecter des mouvements d'objets placés à plusieurs mètres de la bille (5).

9. Dispositif selon l'une quelconque des revendications 1 à 8, dans lequel la monture (13) comprend plusieurs bras venant emprisonner la bille (5) entre eux et montés selon une liaison rotule avec la bille.

10. Dispositif selon l'une quelconque des revendications 1 à 9, dans lequel la lentille (2) est une lentille de Fresnel.

11. Utilisation d'un dispositif d'imagerie selon l'une quelconque des revendications 1 à 10 pour la détection de personnes et/ou la détection de mouvements dans une scène.
